# EUROPÄISCHE PATENTSCHRIFT

(11) **EP 3 693 643 B1**
(45) Veröffentlichungstag und Bekanntmachung des Hinweises auf die Patenterteilung: **24.02.2021**
(21) Anmeldenummer: 19156517.5
(22) Anmeldetag: 11.02.2019
(51) Int. Cl.: F16K 31/60, F16K 3/02

(54) **VENTILOBERTEIL FÜR SANITÄRARMATUREN**
VALVE TOP SECTION FOR SANITARY FITTINGS
PARTIE SUPÉRIEURE DE SOUPAPE POUR ROBINETTERIES SANITAIRES

(43) Veröffentlichungstag der Anmeldung: 12.08.2020
(73) Patentinhaber: Flühs Drehtechnik GmbH, 58515 Lüdenscheid (DE)
(72) Erfinder: Wendt, Jörg, 58515 Lüdenscheid (DE)
(74) Vertreter: Patentanwälte Dörner & Kötter PartG mbB

(56) Entgegenhaltungen:
- EP-A1- 0 426 587
- WO-A1-2005/085691
- DE-T2- 69 008 114
- DE-U1-202011 103 480

## Beschreibung

Die Erfindung betrifft ein Ventiloberteil zum Einbringen in eine Sanitärarmatur, mit einem Kopfstück, in dem eine Spindel schwenkbar gelagert ist, die mit ihrem ersten Ende aus dem Kopfstück herausragt und mit Ihrem zweiten Ende über einen Zapfen mit einer Steuerscheibe im Eingriff steht, die mit einer ortsfesten Durchlassscheibe in Berührung steht, die mindestens eine Durchtrittsöffnung aufweist, wobei an dem ersten Ende der Spindel ein Griffteil angeordnet ist.

Mit Hilfe von Ventiloberteilen wird der Austritt von Medien aus Armaturen, insbesondere von Wasser aus Sanitärarmaturen gesteuert. Für diesen Zweck wird das Ventiloberteil mittels seines Kopfstücks in das Gehäuse einer Armatur positioniert; auf seine Spindel wird ein Drehgriff oder Hebel gesteckt. Bei bekannten Ventiloberteilen mit drehbarer Spindel (vgl. DE 32 07 895 C2) sind jeweils zwei Scheiben zur Steuerung des Durchflusses vorgesehen. Die Scheiben sind aus keramischem Material hergestellt. Einer der beiden Scheiben - Steuerscheibe - ist mithilfe eines mit der Spindel in Verbindung stehenden Mitnehmers drehbar in dem Ventiloberteil angeordnet. Die andere Scheibe - Durchlassscheibe - ist eine feste Ventilsitzscheibe, auch als Festscheibe bezeichnet. Bei Drehung der Steuerscheibe gleiten die Scheiben aneinander. Auf der dem Ventilsitz der Armatur zugewandten Seite ist eine Dichtung angeordnet, die an der Durchlassscheibe anliegt. Die Dichtung überragt die Stirnfläche des Ventiloberteils. Sie dient zur Abdichtung sowohl der Durchlassscheibe als auch zum Ventilsitz der Armatur.

Auch bei Einhebel-Mischventilen finden zur Steuerung des Durchflusses Keramik-Scheiben Anwendung (vgl. EP 1 462 692 B1). Bei diesen Ventilen ist eine dreh- und schwenkbar gelagerte Spindel vorgesehen, mit deren Hilfe die Steuerung des Durchflusses erfolgt. Die Spindel weist eine Kugel auf, mit deren Hilfe die Spindel in dem Kopfstück schwenkbar ist. Unmittelbar im Anschluss weist die Spindel einen weiteren kugelförmigen Teil auf, mit dem die Spindel in einen mit der Steuerscheibe in Verbindung stehenden Mitnehmer greift. Die Steuerung des Wasseraustritts erfolgt hier durch Verschwenken der Spindel, die über den Eingriff in die Steuerscheibe translatorisch relativ zur ortsfesten Durchlassscheibe bewegt wird.

Zum Verschwenken der Spindel ist eine Kreisbogenbewegung des mit der Spindel verbundenen Griffs um die Schwenkachse der Spindel erforderlich. Um diese Bewegung zu ermöglichen, ist eine ausreichende Länge der Spindel erforderlich, so dass der Griff in ausreichendem Abstand zu der Armatur, die das Ventiloberteil aufnimmt, positioniert wird. In manchen Anwendungen ist eine dezente, kompakte Anordnung von Armatur und Griff erwünscht. Dabei wird die von der Armatur beabstandete Positionierung des Griffs optisch als störend empfunden Aus der EP 0 426 587 A1 und der WO 2005/085691 A1 sind weitere Beispiele für Ventiloberteile bekannt, bei welchen die Steuerung des Durchflusses durch eine schwenkbar gelagerte Spindel erfolgt.

Hier will die Erfindung Abhilfe schaffen. Der Erfindung liegt die Aufgabe zugrunde, ein Ventiloberteil bereitzustellen, dessen Griff bei uneingeschränkter Funktionalität unmittelbar an der Armatur positionierbar ist. Gemäß der Erfindung wird diese Aufgabe durch die Merkmale des kennzeichnenden Teils des Patentanspruchs 1 gelöst.

Mit der Erfindung ist ein Ventiloberteil bereitgestellt, dass bei uneingeschränkter Funktionalität eine Positionierung des Griffs unmittelbar an der Armatur ermöglicht. Dadurch, dass das Griffteil als Schieber ausgebildet ist, der einen Schwenkraum aufweist, in dem ein Mitnehmer angeordnet ist, über den die Spindel mit dem Schieber verbunden ist, ist ein Verschwenken der Spindel durch eine lediglich translatorische Bewegung des Griffteils ermöglicht, wobei die Bewegung des Schiebers über den Mitnehmer auf die Spindel übertragen wird. Die hierdurch bewirkte Kreisbogenbewegung des ersten Endes der Spindel um deren Schwenkachse erfolgt innerhalb des Schwenkraums des Schiebers. Der Schwenkraum ist hierzu derart ausgebildet, dass er das erste Ende der Spindel in jeder Schwenkposition aufnimmt. Das als Schieber ausgebildete Griffteil wird in diese Kreisbogenbewegung des ersten Endes der Spindel nicht involviert.

In Weiterbildung der Erfindung ist der Mitnehmer durch eine Mitnehmerachse gebildet, die durch ein sich in Axialrichtung der Spindel erstreckendes Langloch geführt ist. Hierdurch ist ein Gleiten des Mitnehmers bei einer Schwenkbewegung der Spindel innerhalb des Langlochs ermöglicht; eine Kraftübertragung zwischen Schieber und Spindel erfolgt ausschließlich in translatorischer Bewegungsrichtung des Schiebers. Unter dem Begriff "Langloch" ist vorliegend auch ein in die Spindel eingebrachter Schlitz zu subsummieren, der quasi ein oben offenes Langloch darstellt.

Die Spindel ist über ein Federelement mit dem Mitnehmer verbunden. Hierdurch ist eine Vorspannung des Schiebers über den in diesem angeordneten Mitnehmer gegen die Spindel erzielt, wodurch der Schieber auf der Verschiebefläche der Armatur gehalten ist. Bevorzugt ist das Federelement über eine Schraubenfeder gebildet.

Die Spindel ist über einen Achsstift mit dem Kopfstück schwenkbar verbunden, wobei der Achsstift mit dem Federelement verbunden ist. Bevorzugt ist das Federelement von einer axial in die Spindel eingebrachten Sackbohrung aufgenommen, die in Querrichtung von dem Achsstift durchdrungen ist, der mit dem Federelement verbunden ist. Hierdurch ist eine Integration des Federelements in die Spindel erzielt, wodurch eine äußere Beeinträchtigung des Federelements durch Verschmutzung vermieden und eine kompakte Bauweise erzielt ist.

In Weiterbildung der Erfindung ist die Mitnehmerachse von einer Kulisse des Schiebers aufgenommen, die bevorzugt in die den Schwenkraum begrenzende Wand eingebracht ist. Dabei ist die Mitnehmerachse bevorzugt in die Kulisse hineinbewegbar und in einer definierten Position verrastbar. Hierdurch ist eine einfache Montage des Schiebers auf der Spindel ermöglicht. Hierzu wird die Mitnehmerachse in die Kulisse eingeführt und durch Rotation des Schiebers in einen Hinterschnitt der Kulisse verbracht, in dem die Mitnehmerachse durch die von dem Federelement auf diese aufgebrachte Vorspannung ähnlich einem Bajonettverschluss hineingleitet. Der Schieber ist so fest mit der Spindel verbunden.

In Weiterbildung der Erfindung weist die Spindel einen kugelförmigen Abschnitt auf, an dem der Zapfen angeordnet ist. Dabei liegt die Spindel bevorzugt mit ihrem kugelförmigen Abschnitt auf einer Scheibenführung auf, in der die Steuerscheibe geführt ist. Vorteilhaft ist die Spindel mit Ihrem kugelförmigen Abschnitt zwischen zwei beabstandet zueinander angeordneten Dichtungsringen schwimmend gelagert, welche bevorzugt als O-Ringe ausgebildet sind. Hierdurch ist eine gedämpfte Lagerung der Spindel erzielt, wodurch eine gute Haptik des Ventiloberteils erzielt ist.

In weiterer Ausgestaltung der Erfindung weist das Kopfstück an seiner der Spindel zugewandten Stirnseite eine längliche Öffnung auf, durch das die Spindel hindurchtritt und in der sie in Schwenkrichtung geführt ist.

In Weiterbildung der Erfindung weist das Kopfstück an seinem dem Schieber zugewandten Ende außen eine Aufnahme für einen Verankerungselement auf. Hierdurch ist eine einfache Fixierung einer Abdeckplatte, beispielsweise einer Glasplatte ermöglicht, auf welcher der Schieber aufliegt.

In Ausgestaltung der Erfindung ist die Aufnahme durch eine Nut oder durch ein Außengewinde gebildet, wobei das Verankerungselement bevorzugt durch einen Federring oder durch eine Mutter gebildet ist.

Gegenstand der Erfindung ist weiterhin eine Sanitärarmatur mit einem Ventilsitz, in dem wenigstens ein Zulaufkanal und wenigstens ein Ablaufkanal münden und in dem ein Ventiloberteil der vorgenannten Art eingebracht ist, wobei eine Gleitplatte angeordnet ist, durch welche die Spindel geführt ist und auf welcher der Schieber des Ventiloberteils verschiebbar aufliegt. Die Gleitplatte kann aus jedwedem, vorzugsweise glatten Material, beispielsweise in Form einer Glasplatte ausgebildet sein.

In Weiterbildung der Erfindung ist oberhalb des Ventilsitzes ein Innengewinde angeordnet, in das eine Schraubhülse zur Fixierung des Ventiloberteils in dem Ventilsitz einschraubbar ist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

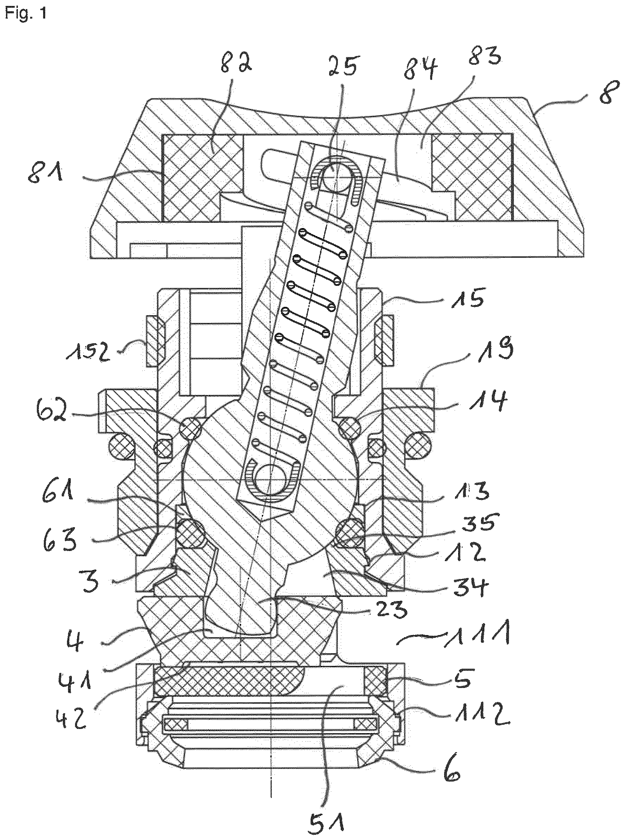

- Figur 1: die schematische Darstellung eines Ventiloberteils im Längsschnitt;

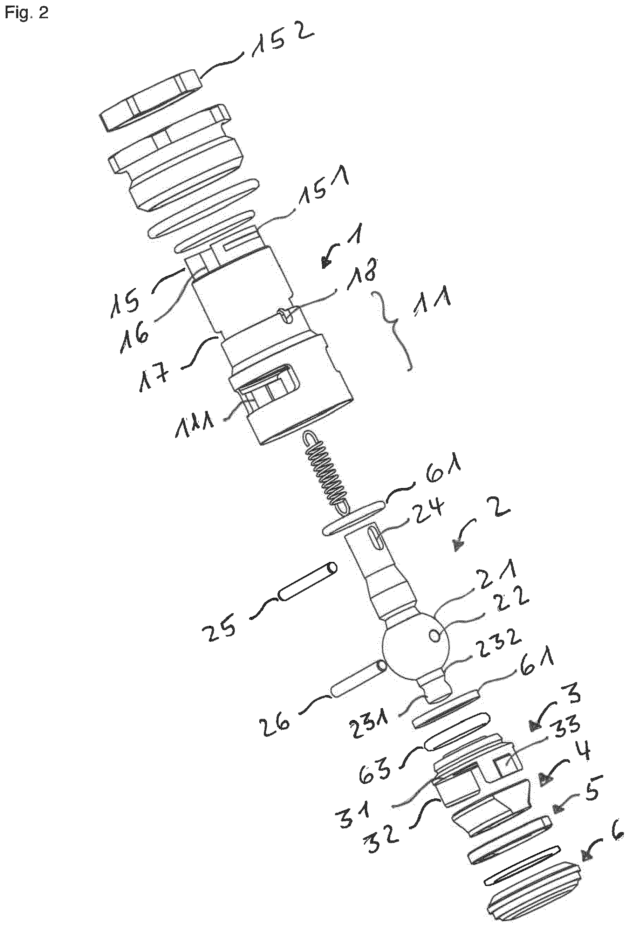

- Figur 2: die schematische Darstellung des Ventiloberteils aus Figur 1 in Explosionsdarstellung (ohne Schieber) und
- Figur 3: die schematische Darstellung einer Sanitärarmatur mit montiertem Ventiloberteil nach Figur 1.

Das als Ausführungsbeispiel gewählte Ventiloberteil weist ein Kopfstück 1 auf, das von einer in ihm radial geführten Spindel 2 mittig durchsetzt ist. Die Spindel 2 ist über eine drehfeste Scheibenführung 3 geführt und mit einer Steuerscheibe 4 im Eingriff, welche wiederum in der Scheibenführung 3 geführt ist. Die Steuerscheibe 4 steht mit einer Durchlassscheibe 5 in Berührung, die in dem Kopfstück gehalten ist und auf ihrer der Steuerscheibe 4 abgewandten Seite mit einer Dichtung 6 in Berührung steht. Die Spindel 2 nimmt eine Schraubenfeder 7 auf, über welche die Spindel 2 mit einem Schieber 8 verbunden ist.

Das Kopfstück 1 besteht aus einem symmetrischen Hohlkörper, dessen beiden Stirnflächen offen sind. Auf seiner der Armatur 9 zugewandten Seite weist das Kopfstück 1 einen hülsenartigen Teil 11 auf, in dem diametral gegenüberliegend zwei Durchtrittsfenster 111 eingebracht sind, die von Längsstegen begrenzt sind. Innen ist in dem hülsenartigen Teil 10 endseitig eine Nut 112 zur Aufnahme der Dichtung 6 eingebracht.

Auf seiner der Armatur 9 abgewandten Seite ist im Anschluss an die Fenster 111 innen eine umlaufende Rastnut 12 zur Rastverbindung der Scheibenführung 3 angeordnet. Im weiteren Verlauf der Innenkontur des Kopfstücks 1 ist der Innendurchmesser abgesetzt und mit geringerem Durchmesser fortgeführt, wodurch ein Absatz 13 gebildet ist. Der Absatz 13 dient der Anlage eines Halterings 61, der zusammen mit der Scheibenführung 3 eine Aufnahme für einen zweiten O-Ring 63 ausbildet. An den Absatz 13 schließt sich eine kugelabschnittförmige Durchmesserverjüngung an, die von einer Ringnut 14 zur Aufnahme eines ersten O-Rings 62 begrenzt ist und in einer senkrechten Bohrung mündet, an die sich ein Führungsabschnitt 15 anschließt, der eine längliche Öffnung 16 aufweist. In dem Führungsabschnitt 15 ist außen ein Außengewinde 151 zur Aufnahme einer Ankermutter 152 eingebracht. Unterhalb des Führungsabschnitts 15 ist in das Kopfstück 1 außen eine umlaufende Nut 17 zur Aufnahme eines Dichtungsrings 64 zur Abdichtung gegenüber der Armatur 9 eingebracht. Beabstandet zu der umlaufende Nut 17 sind in das Kopfstück 1 weiterhin diametral gegenüberliegend zwei vertikale Langlochbohrungen 18 zur Aufnahme des durch die Bohrung 22 des kugelförmigen Abschnitts 21 der Spindel 2 geführten Achsstifts 26 eingebracht.

Die Spindel 2 ist im Wesentlichen zylinderförmig ausgebildet und weist an einem Ende eine kugelförmige Anformung 21 auf, in die orthogonal zur Rotationsachse der Spindel 2 eine Bohrung 22 zur Aufnahme eines Achsstifts 26 eingebracht ist. An seiner der Scheibenführung 3 zugewandten Seite ist in den kugelförmigen Abschnitt 21 koaxial zur Rotationsachse der Spindel 2 ein Zapfen 23 eingeschraubt, der endseitig einen tonnenförmigen Mitnehmerabschnitt 231 aufweist, an den sich ein zylindrischer Abschnitt 232 anschließt, der an dem kugelförmigen Abschnitt 21 anliegt. An ihrem dem Zapfen 23 gegenüberliegenden Ende ist in die Spindel 2 orthogonal zu Ihrer Rotationsachse eine Langlochbohrung 24 zur Aufnahme der Mitnehmerachse 25 eingebracht. Zentrisch ist die Spindel 2 mit einer entlang ihrer Rotationsachse verlaufenden Sacklochbohrung 27 versehen, die oberhalb des Zapfens 23 in dem kugelförmigen Abschnitt 21 mündet und von der Bohrung 22 sowie der Langlochbohrung 24 durchkreuzt ist. Die Sacklochbohrung 27 dient der Aufnahme der Schraubenfeder 7, die endseitig von den Achsstift 26 auf der einen Seite sowie der Mitnahmeachse 25 auf der anderen Seite aufgenommen ist.

Die Spindel 2 ist in dem Kopfstück 1 mit ihrer kugelförmigen Anformung 21 zwischen dem ersten O-Ring 62 und dem zweiten O-Ring 63 schwimmend gelagert und durchdringt die längliche Öffnung 16 des Führungsabschnitts 15.

Die Scheibenführung 3 ist im Wesentlichen zylindrisch ausgebildet. An ihrer dem kugelförmigen Abschnitt 21 der Spindel 2 abgewandten Seite ist eine ebene Führungsfläche 31 angeordnet, die von zwei diametral gegenüberliegend angeordneten Führungsstegen 32 begrenzt ist. Die Führungsstege 32 sind an ihrer Außenseite mit zwei Führungsnasen 33 versehen, die in - nicht dargestellte - Führungsnuten auf der Innenseite des hülsenartigen Teils 11 des Kopfstücks 1 eingreifen, welche von der Nut 112 bis zum oberen Rand der Durchtrittsfenster 111 verlaufen. Durch das Eingreifen der Führungsnasen 33 in die Führungsnuten des Kopfstücks ist eine Verdrehsicherung der Scheibenführung 3 innerhalb des Kopfstücks 1 bewirkt.

In die Scheibenführung 3 ist mittig eine Spindelführung 34 in Form eines Langlochs eingebracht, dessen Längsachse parallel zu den Führungsstegen 32 verläuft und durch die der mit der Spindel 2 verbundene Zapfen 23 durchtritt. Die Länge des Langlochs der Spindelführung 34 nimmt entlang der Rotationsachse des zylindrischen Grundkörpers in Richtung der Führungsflächen 31 zu; die Spindelführung 34 ist folglich im Wesentlichen kegelförmig ausgebildet. An ihrem der Führungsflächen 31 abgewandten Ende ist die Spindelführung 34 umlaufend mit einer Kugelaufnahme 35 versehen, die in Art einer Fase ausgebildet ist.

Zwischen den Führungsstegen 32 der Scheibenführung 3 ist an der Führungsfläche 31 anliegend die Steuerscheibe 4 angeordnet. Diese weist eine im Wesentlichen elliptische Außenkontur auf, die an ihren Längsenden orthogonal zur Längsmittelachse gekürzt ist, wodurch zwei zueinander parallele Seitenflächen gebildet sind, die an den Führungsstegen 32 der Scheibenführung 3 anliegen. Mittig ist in die Steuerscheibe 4 eine Sacklochbohrung 41 eingebracht, deren Durchmesser etwas größer ist, als der Durchmesser des kugelabschnittförmigen Endes des Mitnehmerabschnitts 231 des Zapfens 23 der Spindel 2. Im montierten Zustand greift der Mitnehmerabschnitt 231 in die Sacklochbohrung 41 ein. Auf ihrer der Sacklochbohrung 41 gegenüberliegenden Seite der Steuerscheibe 4 ist eine Vertiefung 42 eingebracht, die im Wesentlichen eine der Außenkontur der Steuerscheibe 4 entsprechende Form aufweist.

Die Durchlassscheibe 5 ist im Wesentlichen als kreisrunde Scheibe ausgebildet. Sie weist auf ihrem Umfang zwei sich diametral gegenüberliegende - nicht dargestellte - Führungsnasen auf, die in korrespondierende Führungsnuten des hülsenförmigen Teils 11 des Kopfstücks 1 eingreifen. Die Durchlassscheibe 5 ist damit drehfest in dem Kopfstück 1 gehalten. In der Durchlassscheibe 5 ist eine Durchtrittsöffnung 51 eingebracht, die eine angenähert sichelförmige Kontur aufweist. Wird die Spindel 2 mit dem an dieser befestigten Zapfen 23 innerhalb der Spindelführung 34 geschwenkt, so wird die Steuerscheibe 4 radial auf der Durchlassscheibe 5 bewegt, wodurch die Durchtrittsöffnung 51 der Durchlassscheibe 5 freigegeben bzw. verschlossen wird.

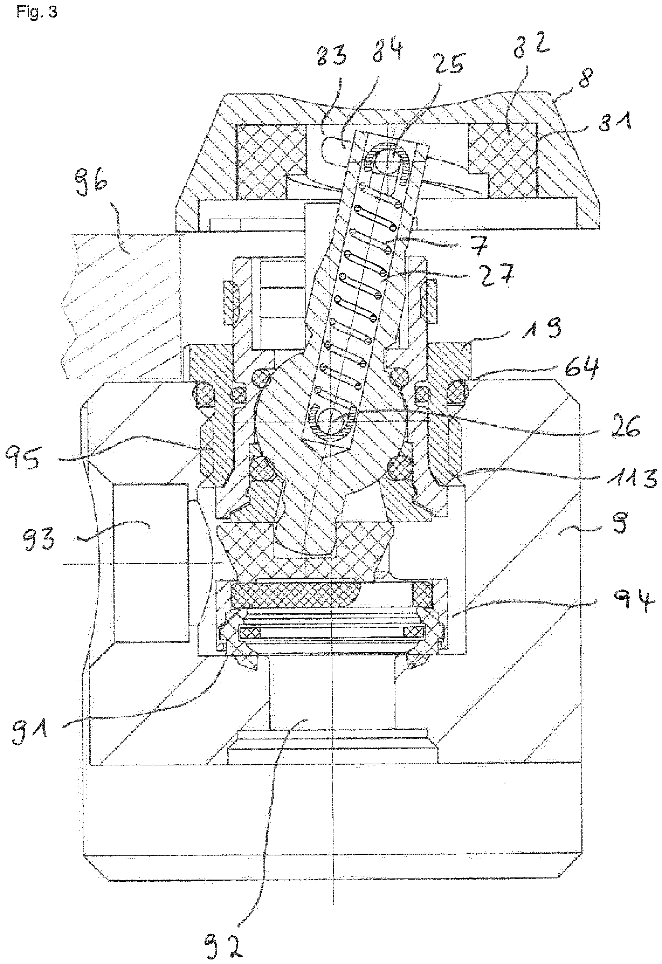

Das Kopfstück 1 ist in den Ventilsitz 91 der Armatur 9 eingesetzt, wobei das Kopfstück 1 über die Dichtung 6 gegenüber dem Zulaufkanal 92 der Armatur 9 abgedichtet ist. Dabei sind die Durchtrittsfenster 111 des hülsenartigen Teils 11 des Kopfstücks 1 in einer Kammer 94 der Armatur 9 positioniert, in die ein Ablaufkanal 93 mündet. Oberhalb der Kammer 94 weist die Armatur ein Innengewinde 95 auf, in die eine Schraubhülse 19 eingeschraubt ist, über die das Kopfstück 1 in der Armatur 9 fixiert ist. Die Schraubhülse 19 liegt dabei auf einem oberhalb der Durchtrittsfenster 111 umlaufend an dem hülsenartigen Teil 11 des Kopfstücks 1 angeformten Absatz 113 auf. Oberhalb des Innengewindes 95 ist die Schraubhülse 19 über einen Dichtungsring 64 gegenüber der Armatur 9 abgedichtet. Auf der Armatur 9 ist eine - in Figur 3 lediglich angedeutete - Glasscheibe 96 befestigt, auf welcher der Schieber 8 des Ventiloberteils aufliegt. Die Glasscheibe 96 ist über eine Ankermutter 152, die auf das Außengewinde 151 des Führungsabschnitts 15 des Kopfstücks 1 aufgeschraubt ist, auf der Armatur 9 fixiert.

Der Schieber 8 weist an seiner der Armatur 9 zugewandten Unterseite eine im Wesentlichen zylindrische Ausnehmung 81 auf, in die ein Kulisseneinsatz 82 eingesetzt ist. Der Kulisseneinsatz 82 weist einen im Wesentlichen hohlzylindrischen Schwenkraum 83 auf, in dessen Mantelfläche eine Kulissenführung 84 eingebracht ist, in welche die Mitnehmerachse 25 hineinbewegbar sowie in einen Hinterschnitt der Kulissenführung 84 einrastbar ist. Der Schwenkraum 83 des Kulisseneinsatzes 82 ist derart dimensioniert, dass das von diesem aufgenommenen Ende der Spindel 2 über deren Schwenkbewegung frei bewegbar ist.

Der Schieber 8 ist über die von den Kulisseneinsatz 82 aufgenommene Mitnehmerachse 25, die über die Schraubenfeder 7 mit dem Achsstift 86 der Spindel 2 verbunden ist, gegen die auf der Armatur 9 angeordnete Glasscheibe 96 vorgespannt. Zur Betätigung des Ventiloberteils wird der Schieber 8 entlang der Glasscheibe 96 verschoben. Diese Schiebebewegung wird über die Mitnehmerachse 25 auf die Spindel 2 übertragen, welche hierdurch um den Achsstift 26 verschwenkt wird. Dabei durchläuft das in den Schwenkraum 83 des Schiebers 8 befindliche Ende der Spindel 2 einen Kreisbogen, ohne jedoch mit einer Wand des Schiebers 8 in Berührung zu kommen. Die Mitnehmerachse 25 wandert hierbei innerhalb der Langlochbohrung 24 der Spindel 2.

## Patentansprüche

1. Ventiloberteil zum Einbringen in eine Sanitärarmatur, mit einem Kopfstück (1), in dem eine Spindel (2) schwenkbar gelagert ist, die mit ihrem ersten Ende aus dem Kopfstück (1) herausragt und mit ihrem zweiten Ende über einen Zapfen (23) mit einer Steuerscheibe (4) im Eingriff steht, die mit einer ortsfesten Durchlassscheibe (5) in Berührung steht, die mindestens eine Durchtrittsöffnung (51) aufweist, wobei an dem ersten Ende der Spindel ein Griffteil angeordnet ist, und wobei das Griffteil als Schieber (8) ausgebildet ist, der einen Schwenkraum (83) aufweist, der das erste Ende der Spindel (2) aufnimmt und in dem ein Mitnehmer angeordnet ist, über den die Spindel (2) mit dem Schieber (8) verbunden ist, **dadurch gekennzeichnet, dass** die Spindel (2) über ein Federelement mit dem Mitnehmer verbunden ist, wobei die Spindel (2) über einen Achsstift (26) mit dem Kopfstück (1) schwenkbar verbunden ist und der Achsstift (26) mit dem Federelement verbunden ist und wobei das Federelement von einer axial in die Spindel (2) eingebrachten Sackbohrung (27) aufgenommen ist, die in Querrichtung von dem Achsstift (26) durchdrungen ist, der mit dem Federelement verbunden ist.

2. Ventiloberteil nach Anspruch 1, **dadurch gekennzeichnet, dass** der Mitnehmer durch eine Mitnehmerachse (25) gebildet ist, die durch ein in Axialrichtung der Spindel (2) sich erstreckendes Langloch (24) geführt ist.

3. Ventiloberteil nach Anspruch 1 oder 2, **dadurch gekennzeichnet, dass** das Federelement eine Schraubenfeder (7) ist.

4. Ventiloberteil nach einem der vorgenannten Ansprüche, **dadurch gekennzeichnet, dass** die Mitnehmerachse (25) von einer Kulisse (84) des Schiebers (8) aufgenommen ist, die bevorzugt in die den Schwenkraum (83) begrenzende Wand eingebracht ist.

5. Ventiloberteil nach Anspruch 4, **dadurch gekennzeichnet, dass** die Mitnehmerachse (25) in die Kulisse (84) hineinbewegbar und in einer definierten Position verrastbar ist.

6. Ventiloberteil nach einem der vorgenannten Ansprüche, **dadurch gekennzeichnet, dass** die Spindel (2) einen kugelförmigen Abschnitt (21) aufweist, an dem der Zapfen (23) angeordnet ist.

7. Ventiloberteil nach Anspruch 6, **dadurch gekennzeichnet, dass** die Spindel (2) mit ihrem kugelförmigen Abschnitt (21) auf einer Scheibenführung (3) aufliegt, in der die Steuerscheibe (4) geführt ist.

8. Ventiloberteil nach einem der Ansprüche 6 oder 7, **dadurch gekennzeichnet, dass** die Spindel (2) mit ihrem kugelförmigen Abschnitt (21) zwischen zwei beabstandet zueinander angeordneten Dichtungsringen, bevorzugt O-Ringen (62, 63), schwimmend gelagert ist.

9. Ventiloberteil nach einem der vorgenannten Ansprüche, **dadurch gekennzeichnet, dass** das Kopfstück (1) an seiner der Spindel (2) zugewandten Stirnseite eine längliche Öffnung (16) aufweist, durch welche die Spindel (2) hindurchtritt und in der sie in Schwenkrichtung geführt ist.

10. Ventiloberteil nach einem der vorgenannten Ansprüche, **dadurch gekennzeichnet, dass** das Kopfstück (1) an seinem dem Schieber (8) zugewandten Ende eine Aufnahme für ein Verankerungselement aufweist.

11. Ventiloberteil nach Anspruch 10, **dadurch gekennzeichnet, dass** die Aufnahme durch eine Nut oder durch ein Außengewinde (151) gebildet ist, wobei das Verankerungselement bevorzugt ein Federring oder eine Ankermutter (152) ist.

12. Sanitärarmatur (9) mit einem Ventilsitz (91), in dem wenigstens ein Zulaufkanal (92) und wenigstens ein Ablaufkanal (93) münden und in den ein Ventiloberteil nach einem der vorgenannten Ansprüche eingebracht ist, wobei eine Gleitplatte (96) angeordnet ist, durch welche die Spindel (2) geführt ist und auf welcher der Schieber (8) des Ventiloberteils verschiebbar aufliegt.

13. Sanitärarmatur nach Anspruch 12, **dadurch gekennzeichnet, dass** diese ein Innengewinde zur Aufnahme einer Schraubhülse (19) zur Fixierung des Ventiloberteils aufweist.

## Claims

1. Upper part of a valve for insertion into a sanitary fitting, with a head piece (1), in which a spindle (2) is pivotably mounted, which protrudes with its first end from the head piece (1) and its second end is engaged via a pin (23) with a control disc (4), which is in contact with a stationary passage disc (5), which has at least one passage opening (51), wherein a handle part is arranged at the first end of the spindle and wherein the handle part is designed as a slide (8), which has a pivot area (83), which receives the first end of the spindle (2) and in which a driver is arranged, via which the spindle (2) is connected to the slide (8), **characterised in that** the spindle (2) is connected to the driver via a spring element, wherein the spindle (2) is pivotably connected to the head piece (1) via an axle pin (26) and the axle pin (26) is connected to the spring element and wherein the spring element is received by a blind hole (27) axially inserted in the spindle (2), which is transversely penetrated by the axle pin (26), which is connected to the spring element.

2. Upper part of a valve according to claim 1, **characterised in that** the driver is formed by a driver axle (25), which is guided through a long hole (24) extending in an axial direction of the spindle (2).

3. Upper part of a valve according to claim 1 or 2, **characterised in that** the spring element is a coil spring (7).

4. Upper part of a valve according to one of the previous claims, **characterised in that** the driver axle (25) is received by a link (84) of the slide (8), which is preferably inserted in the wall delimiting the pivot area (83).

5. Upper part of a valve according to claim 4, **characterised in that** the driver axle (25) can be moved into the link (84) and can be latched in a defined position.

6. Upper part of a valve according to one of the previous claims, **characterised in that** the spindle (2) has a spherical section (21), on which the pin (23) is arranged.

7. Upper part of a valve according to claim 6, **characterised in that** the spindle (2) rests with its spherical section (21) on a disc guide (3), in which the control disc (4) is guided.

8. Upper part of a valve according to one of claims 6 or 7, **characterised in that** the spindle (2) is floatingly mounted with its spherical section (21) between two sealing rings, preferably O-rings (62, 63), arranged at a distance from one another.

9. Upper part of a valve according to one of the previous claims, **characterised in that** the head piece (1) has an elongate opening (16) at its front end facing the spindle (2), through which the spindle (2) passes and in which it is guided in the pivot direction.

10. Upper part of a valve according to one of the previous claims, **characterised in that** the head piece (1) has a receptacle for an anchoring element at its end facing the slide (8).

11. Upper part of a valve according to claim 10, **characterised in that** the receptacle is formed by a groove or by an external thread (151), wherein the anchoring element is preferably a spring ring or an anchor nut (152).

12. Sanitary fitting (9) with a valve seat (91), into which lead at least one inlet channel (92) and at least one outlet channel (93) and in which an upper part of a valve according to one of the previous claims is inserted, wherein a slide plate (96) is arranged, through which the spindle (2) is guided and on which displaceably rests the slider (8) of the upper part of a valve.

13. Sanitary fitting according to claim 12, **characterised in that** it has an internal thread for receiving a screw sleeve (19) for fixing the upper part of a valve.

## Revendications

1. Partie supérieure de soupape à introduire dans une robinetterie sanitaire, comprenant une pièce têtière (1) dans laquelle une broche (2) est en appui pivotant, broche qui fait saillie par sa première extrémité hors de la pièce têtière (1) et qui par sa seconde extrémité engrène via un picot (23) dans un disque de commande (4), disque qui est en contact avec un disque de passage (5) immobile présentant au moins un orifice de passage (51), sachant que contre la première extrémité de la broche est disposée une pièce de poignée, et sachant que la pièce de poignée est configurée comme curseur (8) présentant un volume de pivotement (83) qui reçoit la première extrémité de la broche (2) et dans lequel est disposé un taquet entraîneur via lequel la broche (2) est reliée avec le curseur (8), **caractérisée en ce que** la broche (2) est reliée via un élément ressort avec le taquet entraîneur, sachant que la broche (2) est reliée de manière pivotante via un axe (26) avec la pièce têtière (1) et que l'axe (26) est relié à l'élément ressort, et sachant que l'élément ressort est reçu par un trou borgne (27) ménagé axialement dans la broche (2), trou qui est traversé dans le sens transversal par l'axe (26) qui est relié avec l'élément ressort.

2. Partie supérieure de soupape selon la revendication 1, **caractérisée en ce que** le taquet entraîneur est formé par un axe entraîneur (25) guidé par un trou oblong (24) s'étendant dans le sens axial de la broche (2).

3. Partie supérieure de soupape selon la revendication 1 ou 2, **caractérisée en ce que** l'élément ressort est un ressort hélicoïdal (7).

4. Partie supérieure de soupape selon l'une des revendications précédentes, **caractérisée en ce que** l'axe entraîneur (25) est reçu par une coulisse (84) du curseur (8), coulisse qui est logée de préférence dans la paroi délimitant le volume de pivotement (83).

5. Partie supérieure de soupape selon la revendication 4, **caractérisée en ce que** l'axe entraîneur (25) peut être introduit à l'intérieur de la coulisse (84) et encranter dans une position définie.

6. Partie supérieure de soupape selon l'une des revendications précédentes, **caractérisée en ce que** la broche (2) présente un segment (21) en forme de bille contre lequel est disposé le picot (23).

7. Partie supérieure de soupape selon la revendication 6, **caractérisée** en ce la broche (2) avec son segment (21) en forme de bille applique sur un guidage (3) de disque dans lequel le disque de commande (4) est guidé.

8. Partie supérieure de soupape selon l'une des revendications 6 ou 7, **caractérisée en ce que** la broche (2) avec son segment (21) en forme de bille est en appui flottant entre deux bagues d'étanchéité, de préférence des joints toriques (62, 63), disposées à distance l'une de l'autre.

9. Partie supérieure de soupape selon l'une des revendications précédentes, **caractérisée en ce que** la pièce têtière (1) présente, sur son côté frontal regardant la broche (2), un orifice oblong (16) par lequel est guidée dans le sens de pivotement la broche (2) sortant par ledit orifice.

10. Partie supérieure de soupape selon l'une des revendications précédentes, **caractérisée en ce que** la pièce têtière (1) présente, sur son extrémité regardant le curseur (8), un logement pour un élément d'ancrage.

11. Partie supérieure de soupape selon la revendication 10, **caractérisée en ce que** le logement est formé par une gorge ou par un filetage extérieur (151), sachant que l'élément d'ancrage est de préférence une bague ressort ou un écrou d'ancrage (152).

12. Robinetterie sanitaire (9) présentant un siège (91) de soupape dans lequel aboutissent au moins un canal d'afflux (92) et au moins un canal d'écoulement (93) et dans lequel est introduite une partie supérieure de soupape selon l'une des revendications précédentes, sachant qu'est disposée une plaque coulissante (96) à travers laquelle est guidée la broche (2) et sur laquelle le curseur (8) de la partie supérieure de soupape applique de manière coulissante.

13. Robinetterie sanitaire selon la revendication 12, **caractérisée en ce que** cette dernière présente un filetage intérieur recevant une douille de vissage (19) pour immobiliser la partie supérieure de soupape.
